# EUROPEAN PATENT APPLICATION

(11) **EP 4 807 551 A1**
(43) Date of publication of application: **16.09.2026**
(21) Application number: 24890753.7
(22) Date of filing: 14.11.2024
(51) Int. Cl.: G06F 9/50

(54) **MODEL ALGORITHM OPERATION METHOD, DEVICE AND STORAGE MEDIUM**

(30) Priority: 15.11.2023 CN 202311530436
(71) Applicant: ZTE CORPORATION, Shenzhen, Guangdong 518057 (CN)
(72) Inventor: CUI, Ruoji, Shenzhen, Guangdong 518057 (CN); XIONG, Yong, Shenzhen, Guangdong 518057 (CN); HU, Xianhong, Shenzhen, Guangdong 518057 (CN)
(74) Representative: Ziebig Hengelhaupt Intellectual Property Attorneys Patentanwaltskanzlei PartGmbB
(86) International application number: PCT/CN2024/131962
(87) International publication number: WO 2025/103398

(57) **Abstract**

The present application relates to the technical field of machine learning, and discloses a model algorithm operation method, a device and a storage medium. The method of the present application comprises: acquiring an algorithm task to be executed; allocating a corresponding target computing power node to said algorithm task; and controlling a demand node corresponding to said algorithm task to send a task execution parameter to the target computing power node, so that the target computing power node executes said algorithm task on the basis of the task execution parameter.

## Description

### CROSS-REFERENCE TO RELATED APPLICATIONS

The present application claims priority to the Chinese Patent Application No. 202311530436.7, filed on November 15, 2023 to the CNIPA, and entitled "MODEL ALGORITHM OPERATION METHOD, DEVICE AND STORAGE MEDIUM", the entire content of which is incorporated herein by reference.

### TECHNICAL FIELD

The present application relates to the technical field of machine learning, in particular to a model algorithm operation method, a device and a storage medium.

### BACKGROUND

Nowadays, the model algorithms of Artificial Intelligence (AI) applications are mostly computed in the cloud. However, AI applications require high computing power, and the performance requirements for the cloud are extremely high, which puts a lot of pressure on the cloud. Machine learning at the edge and terminal sides (i.e., running corresponding model algorithms of machine learning) can improve the reliability and response speed of local devices, reduce the bandwidth of data uploaded to the cloud, and ensure the security of local data. Therefore, AI computing has gradually developed towards the edge and terminal sides.

Deploying machine learning for various components and devices at the edge side requires close service collaboration between devices at the edge and terminal sides. However, there is a problem that applications at the terminal side are fragmented in scenarios, such as the power system in a communication station rooms is usually a heterogeneous system composed of power supplies, batteries, temperature control, and dynamic environment devices from different manufacturers. The scenario is complex, and there are many versions and diverse interface protocols of various devices, resulting in extremely complex interaction between the edge and terminal sides, making it difficult to achieve personalized user needs, independent implementation of new businesses, upgrade and maintenance, and thus limiting the development of machine learning at the terminal side.

### SUMMARY

The main purpose of the present application is to provide a model algorithm operation method, a device, and a storage medium.

To achieve the above purpose, the embodiments of the present application provide a model algorithm operation method, performed by a power system, the power system is provided with a demand node and a computing node connected to each other, the demand nodes includes an intelligent node device capable of executing a model algorithm in the power system, and the computing node is a demand node in an idle state; and the model algorithm operation method includes: acquiring an algorithm task to be executed; allocating a corresponding target computing node to the algorithm task to be executed; and controlling a demand node corresponding to the algorithm task to be executed to send a task execution parameter to the target computing node, so that the target computing node executes the algorithm task to be executed on the basis of the task execution parameter.

In addition, to achieve the above purpose, the embodiments of the present application also propose a model algorithm operation apparatus, applied to a power system, the power system is provided with a demand node and a computing node connected to each other, the demand nodes includes an intelligent node device capable of executing a model algorithm in the power system, and the computing node is a demand node in an idle state; the model algorithm operation device including: an acquisition module for acquiring an algorithm task to be executed; an allocation module for allocating a corresponding target computing node to the algorithm task to be executed; and a control module for controlling a demand node corresponding to the algorithm task to be executed to send a task execution parameter to the target computing node, so that the target computing node executes the algorithm task to be executed on the basis of the task execution parameter.

In addition, to achieve the above purpose, the embodiments of the present application also propose a model algorithm operation device, including a processor, a memory, and a model algorithm running program stored on the memory and executable on the processor, which when executed by the processor, it implements the steps of the model algorithm operation method as described above.

In addition, to achieve the above purpose, the embodiments of the present application also propose a computer-readable storage medium, which when executed, it implements the steps of the model algorithm operation method as described above.

### BRIEF DESCRIPTION OF DRAWINGS

Fig. 1 is a schematic diagram of the structure of an electronic device in the hardware operating environment involved in the embodiments of the present application.
Fig. 2 is a flowchart of a first embodiment of a model algorithm operation method in the present application.
Fig. 3 is a flowchart of a second embodiment of a model algorithm operation method in the present application.
Fig. 4 is a flowchart of a third embodiment of a model algorithm operation method in the present application.
Fig. 5 is a flowchart of a fourth embodiment of a model algorithm operation method in the present application.
Fig. 6 is a structural block diagram of a first embodiment of a model algorithm operation apparatus in the present application.

### DETAILED DESCRIPTION

It should be understood that the specific embodiments described herein are only used to explain the present application and are not intended to limit the present application.

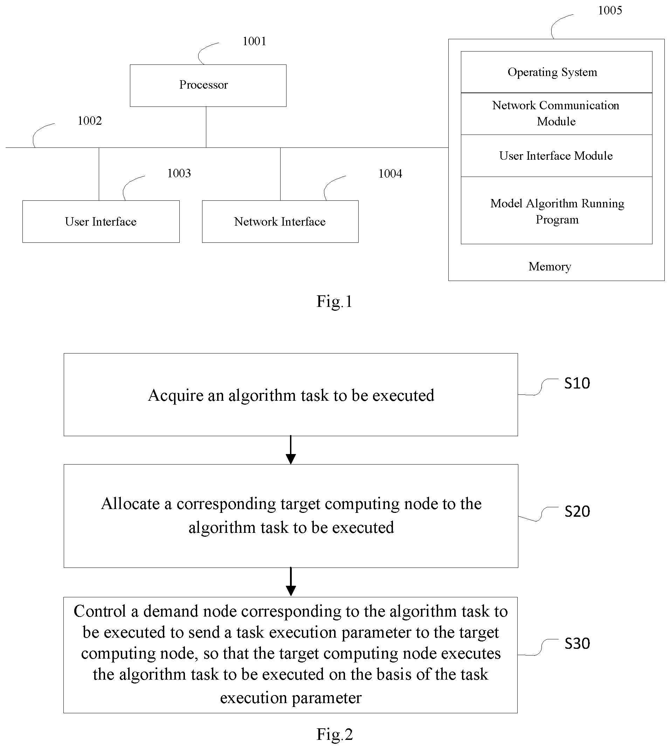

Referring to Fig. 1, Fig. 1 is a schematic diagram of the structure of the model algorithm operation device in the hardware operating environment involved in the embodiments of the present application.

As shown in Fig. 1, the electronic device may include: a processor 1001 such as a Central Processing Unit (CPU), a communication bus 1002, a user interface 1003, a network interface 1004, and a memory 1005. The communication bus 1002 is used to achieve connection communication among the components. The user interface 1003 may include a display, an input unit such as a keyboard, and an optional user interface 1003, which may also include standard wired and wireless interfaces. Optionally, the network interface 1004 may include standard wired and wireless interfaces (such as Wireless Fidelity (WI-FI) interface). Memory 1005 can be high-speed Random Access Memory (RAM) or stable Non Volatile Memory (NVM), such as disk storage. Optionally, the memory 1005 can also be storage device independent of the aforementioned processor 1001.

Those skilled in this field can understand that the structure shown in Fig. 1 does not constitute a limitation on electronic devices, and may include more or fewer components than shown in the diagram, or combine certain components, or arrange different components.

As shown in Fig. 1, the memory 1005 as a storage medium can include an operating system, a network communication module, a user interface module, and a model algorithm running program.

In the electronic device shown in Fig. 1, network interface 1004 is mainly used for data communication with a network server; the user interface 1003 is mainly used for data interaction with users; the processor 1001 and the memory 1005 in the electronic device of the present application can be arranged in the model algorithm operation device. The electronic device calls the model algorithm running program stored in the memory 1005 through the processor 1001 and executes the model algorithm operation method provided in the embodiments of the present application.

The present embodiment provides a model algorithm operation method. Referring to Fig. 2, Fig. 2 is a flowchart of the first embodiment of the model algorithm operation method in the present application. In this embodiment, the model algorithm operation method includes the following steps.

At Step S10: an algorithm task to be executed is acquired.

It should be noted that the executing entity of this embodiment can be a power system or a model algorithm operation device deployed in the power system. The model algorithm operation device can be a device that can monitor and schedule various devices in the power system, such as a Concentrated Supervision Unit (CSU) as well as other devices that can achieve the same or similar functions, which is not limited herein in this embodiment. In this embodiment and the following embodiments, the model algorithm operation method of the present application will be illustrated by taking the model algorithm operation device as an example.

It should be noted that the power system mentioned in this embodiment can be an intelligent power system in related fields such as communication power supply, energy storage system, photovoltaic power generation, etc., for example, an intelligent power system that supplies power to communication base stations, etc. In the power system, there are interconnected demand and computing nodes. The demand node is an intelligent node device that can execute a model algorithm in the power system, and the computing node is a demand node in the idle state.

The intelligent node device can be a device equipped with a computing power core (such as Central Processing Unit (CPU), Microcontroller Unit (MCU), and other core processors) in the power system, such as a rectifier, an intelligent power supply, etc.; and the intelligent node device that can execute model algorithm can be modified to run model algorithms, such as burning the model algorithm code (C language code or other types of code) corresponding to the model algorithm into the computing power core of the intelligent node devices.

In order to avoid excessive modifications to the power system, the demand node, computing node, and model algorithm operation device can be connected by using the connection method of the power system itself. For example, if the devices in the power system are connected and communicated via a bus (such as Controller Area Network (CAN) bus), then the demand node, computing node, and model algorithm operation device can be also communicated via the bus.

In practical use, in order to ensure the reliability of the power system without affecting it, redundancy design is generally adopted. That is, on the basis of ensuring the normal operation of the power system, an additional number of intelligent node devices are arranged. In order to avoid low load operation and low utilization of intelligent node device, the model algorithm operation device can control the intelligent node device to operate in turn and perform power supply tasks. At this time, some intelligent node devices will inevitably be idle.

For example, the power system CSU can control some rectifiers, batteries, and other node devices to work in turn, standby, or enter sleep mode according to service needs, reducing the number of working node devices to achieve optimal system energy efficiency or extending the service life of node devices. Specific controls can be as follows.
(1) Rectifier: CSU dynamically controls rectifiers to work in turn. The rectifier in working operates at the most efficient loading point, improving energy conversion efficiency; and the rectifier that is not working takes rest, and the lifespan of the device is extended.
(2) Intelligent battery: CSU dynamically controls the batteries to work in turn. The battery module in working operates at its highest efficiency point (if the battery has a built-in Direct Current to Direct Current converter (DC/DC), and the overall energy efficiency of its battery cell charging and discharging efficiency and DC/DC conversion efficiency are controlled to be the highest); and the batteries that are not working are given rest, and the lifespan of the devices is extended.
(3) Other devices: such as DC/DC, Direct Current to Alternating Current Converter (DC/AC), etc., also undergo sleep or in-turn work control.

During this process, the idle resources such as computing power, memory, and network of each node device that is not working (only its power conversion part is not working) are precisely used to run the model algorithm.

On this basis, in order to avoid affecting the normal operation of the power system, it is necessary to prevent intelligent node devices that are executing power supply tasks from performing complex computations. Therefore, demand nodes can be further classified, and some of them that are idle can be used as computing nodes. At this time, when demand nodes need to perform complex computations, instead of executing directly, they can submit an algorithm task to the model algorithm operation device, and the model algorithm operation device will allocate corresponding computing nodes to execute the taks.

The computing node may not have sufficient computing power itself. In order to arrange computations reasonably, when complex computations need to be performed, the computing node can also generate a corresponding algorithm task and submit the task to the model algorithm operation device for unified allocation.

In practical processing, the model algorithm operation device may simultaneously link to multiple demand nodes. At this time, the model algorithm operation device can sequentially process the algorithm tasks submitted by the demand nodes. The algorithm task to be executed can be the algorithm task currently being processed by the model algorithm operation device (i.e., allocating computing node).

At Step S20: a corresponding target computing node is allocated to the algorithm task to be executed.

It can be understood that after acquiring the algorithm task to be executed, the model algorithm operation device needs to allocate the algorithm task to be executed to the corresponding computing node for processing. At this time, the model algorithm operation device can scan the running state of each demand node, determine which one is currently used as computing node, and then select the computing node used to processes the algorithm task to be executed from the computing nodes as a target computing node.

In order to avoid too long waiting time for execution of the algorithm task, when the corresponding target computing node is allocated for the algorithm task to be executed, the computing node that is not executing other algorithm tasks can be allocated as the target computing node.

At Step S30: a demand node corresponding to the algorithm task to be executed is controlled to send a task execution parameter to the target computing node, so that the target computing node executes the algorithm task to be executed on the basis of the task execution parameter.

It can be understood that after the corresponding target computing node is allocated to the algorithm task to be executed, the demand node corresponding to the algorithm task to be executed can be notified, and the demand node corresponding to the algorithm task to be executed can send the task execution parameters required for executing the algorithm task to be executed to the target computing node. The target computing node will then execute the algorithm task to be executed according to the task execution parameter, and after completion, feedback a result of execution of the algorithm task to be executed to the demand node corresponding to the algorithm task to be executed.

The demand node corresponding to the algorithm task to be executed can be the demand node that submits the algorithm task to be executed to the model algorithm operation device. The task execution parameters can be various parameters involved in computation of the algorithm task to be executed.

According to the embodiment, the algorithm task to be executed is acquired, the corresponding target computing node to the algorithm task to be executed is allocated, and the demand node corresponding to the algorithm task to be executed is controlled to send the task execution parameter to the target computing node, so that the target computing node executes the algorithm task to be executed according to the task execution parameter. Due to modification of the power system and use of idle computing nodes to execute the model algorithm, and frequent interaction between the edge and terminal sides is not involved, so that the model algorithm can be directly deployed and executed on the terminal side while maintenance is easy.

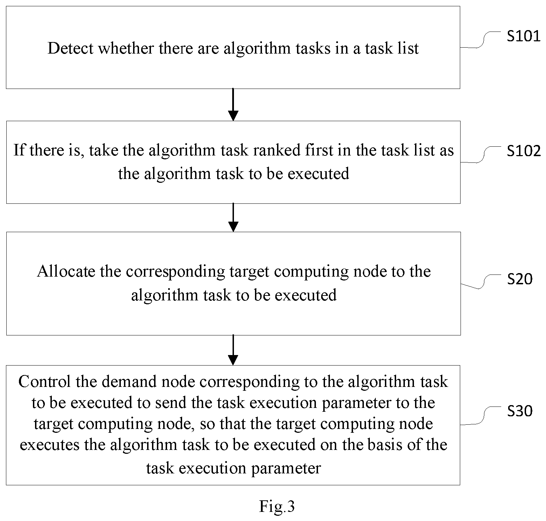

Referring to Fig. 3, Fig. 3 is a flowchart of the second embodiment of the model algorithm operation method in the present application.

Based on the first embodiment described above, Step S10 of the model algorithm operation method in this embodiment includes the following steps. At Step S101: whether there are algorithm tasks in the task list is detected.

It should be noted that the task list can be a list used to store algorithm tasks to be executed, and in order to ensure that submitted algorithm tasks can be executed sequentially, the task list can be constructed based on ordered data structures (such as queues, doubly linked lists, etc.), ensuring that the algorithm tasks in the task list can be processed sequentially on a first-in, first-out basis.

In practical use, it is possible that the model algorithm operation device may simultaneously interface with multiple demand nodes, that is, multiple demand nodes submit algorithm tasks to the model algorithm operation device, in order to avoid data loss, the model algorithm operation device can store the algorithm tasks in the task list in the order of submission when receiving the algorithm tasks submitted by the demand nodes, and then process them in the sorting order of the task list.

At Step S102:if there are algorithm tasks in the task list, the algorithm task ranked first in the task list is taken as the algorithm task to be executed.

It should be noted that the sorting order of the algorithm tasks in the task list is the order in which the algorithm tasks are processed.

If there are algorithm tasks in the task list, it means that a demand node has already submitted the algorithm task. The model algorithm operation device needs to allocate corresponding computing node to process the algorithm task to ensure that the task can be executed normally. The algorithm task ranked first in the task list can be taken as the algorithm task to be executed.

According to the embodiment, whether there are algorithm task in the task list, which is used to store the algorithm tasks to be executed, is detected; and if there are, the algorithm task ranked first in the task list is taken as the algorithm task to be executed. Due to the fact that algorithm tasks submitted by demand nodes are stored in the task list in order upon receipt, and then executed sequentially according to the sorting order in the task list, it can ensure that the algorithm tasks submitted by the demand nodes can be executed in order.

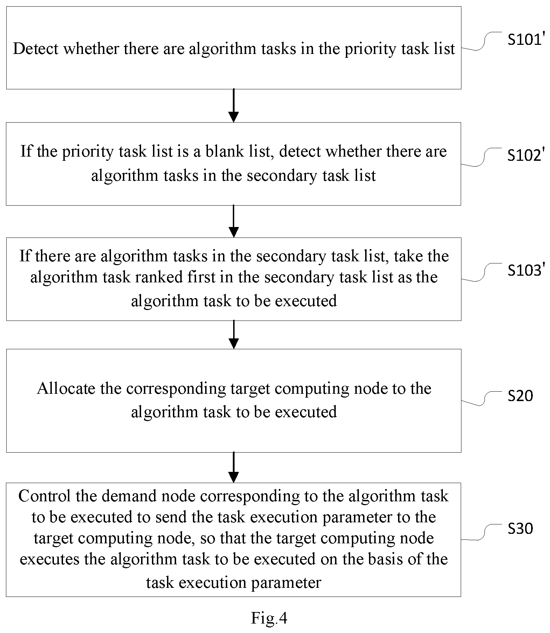

Referring to Fig. 4, Fig. 4 is a flowchart of the third embodiment of the model algorithm operation method in the present application.

Based on the second embodiment mentioned above, Step S10 of the model algorithm operation method in this embodiment includes the following steps. At Step S101': whether there are algorithm tasks in the priority task list is detected.

It should be noted that although in principle, algorithm tasks submitted by the demand nodes need to be executed in the order of submission, in actual processing, it is inevitable that some algorithm tasks will be more important and need to be executed first. In order to ensure that such algorithm tasks can be executed first, the set task list can include a priority task list and a secondary task list, where the priority task list stores algorithm tasks with high execution priority and the secondary task list stores algorithm tasks with low execution priority.

The algorithm tasks with high execution priority can be more important and require execution in priority; the algorithm tasks with low execution priority can be algorithm tasks that can be executed sequentially and do not require execution in priority. Both the priority task list and the secondary task list can be constructed based on an ordered data structure. The algorithms in the priority task list and the secondary task list are sorted according to the order of tasks, that is, the execution order of algorithm tasks.

It can be understood that after setting the priority task list and the secondary task list, in order to ensure that algorithm tasks with high execution priority are executed first, the order of detecting the task list also needs to be adjusted accordingly. At this time, it is possible to first detect whether there are algorithm tasks in the priority task list.

In specific implementation, in order to ensure that the execution priority of each algorithm task can be correctly distinguished, prior to Step S101' in this embodiment, it may also include that: after a delay demand value corresponding to an algorithm task submitted by a demand node is acquired after the algorithm task is received; and when the delay demand value is greater than the preset delay threshold, the algorithm task is added to the secondary task list; or when the delay demand value is less than or equal to the preset delay threshold, the algorithm task is added to the priority task list.

It should be noted that the delay demand value corresponding to the algorithm task can be used to characterize the maximum time that the algorithm task can wait for delayed execution. For example, if the delay demand value corresponding to an algorithm task is 30 minutes, it means that the algorithm task needs to be executed after waiting for a maximum of 30 minutes.

In practical use, the delay demand value can be used to measure the urgency of algorithm tasks. The smaller the delay demand value, the higher the urgency of the algorithm task. The larger the delay demand value, the lower the urgency of the algorithm task. Therefore, the execution priority of algorithm tasks can be determined based on the delay demand value.

It can be understood that if the delay demand value is less than or equal to the preset delay threshold, it indicates that the urgency of the algorithm task is high and needs to be prioritized for execution. Therefore, the algorithm task can be added to the priority task list. If the delay demand value is greater than the preset delay threshold, it indicates that the urgency of the algorithm task is low and does not need to be prioritized for execution. Therefore, the algorithm task can be added to the secondary task list.

When the algorithm task is added to the priority task list or secondary task list, the algorithm task can be added to the end of the task list, that is, the algorithm task can be ranked last in the task list.

At Step S102': If the priority task list is a blank list, whether there are algorithm tasks in the secondary task list is detected.

It should be noted that if the priority task list is blank list, it means that there are no algorithm tasks that need to be prioritized at this time. Therefore, it is possible to further detect whether there are algorithm tasks in the secondary task list. If there are algorithm tasks in the priority task list, it indicates that there are algorithm tasks that need to be prioritized at this time. The algorithm task ranked first in the priority task list can be taken as the algorithm task to be executed.

At Step S103': If there are algorithm tasks in the secondary task list, the algorithm task ranked first in the secondary task list will be taken as the algorithm task to be executed.

It can be understood that if the priority task list is blank list, but there are algorithm tasks in the secondary task list, it means that there are no algorithm tasks with high execution priority at this time. At this time, each algorithm task can be processed only according to the sorting order of the tasks in the secondary task list. Therefore, the algorithm task ranked first in the secondary task list can be taken as the algorithm task to be executed.

In specific implementation, in order to avoid excessively long waiting time for an individual algorithm task, the state of each algorithm task in the secondary task list can be monitored. Prior to Step S101' in this embodiment, it may also include that: whether there is a timeout task in the secondary task list is detected, and if there is, the timeout task is added to the priority task list.

It should be noted that for the timeout task, the difference between a task creation time of the timeout task and a current time is greater than a delay demand value.

The task creation time can be the time when the algorithm task is created by the demand node, submitted to the model algorithm operation device, or added to the task list (added to the priority task list or the secondary task list).

For example, if the current time is A, the task creation time corresponding to the algorithm task is B, and the delay demand value is C, then if A-B≥C, the algorithm task can be determined as a timeout task.

In practical use, if there is a timeout task in the secondary task list, it indicates that some algorithm tasks added to the secondary task list have been waiting for too long and have not been executed yet. At this time, these algorithm tasks need to be prioritized. Therefore, its execution priority can be raised, and the timeout task can be added to the priority task list.

Similarly, in order to avoid excessively long waiting times for individual algorithm tasks, the state of each algorithm task in the priority task list may be monitored. Prior to Step S101' in this embodiment, it may also include that: whether there is a timeout task in the priority task list is detected; and if there is, the priority of the timeout task in the priority task list is raised.

It should be noted that if there are timeout tasks in the priority task list, it indicates that some algorithm tasks added to the priority task list have been waiting for too long and have not been executed. At this time, these algorithm tasks need to be prioritized, and the priority of the timeout tasks in the priority task list can be increased.

In practical use, raising the priority of timeout task in the priority task list can be achieved by increasing the sorting order of timeout task in the priority task list. The magnitude of increase in sorting order can be pre-set by the management personnel of the model algorithm operation device.

For example, the sorting order of the timeout task in the priority task list is increased by one position (such as from fifth to fourth); or directly increase the sorting order of the timeout task in the priority task list to first (such as directly increasing from fifth to first).

In practical implementation, the task list constructed by queue and other data structures is more convenient to access. However, due to underlying implementation reasons (such as arrays or collections) thereof, if the sorting order of the elements needs to be changed, it needs to be modified as a whole, which is more complex and time-consuming. In contrast, for the doubly linked list data structure, if the sorting order of the elements needs to be modified, only the pointers in some of the elements need to be modified, which is faster. Therefore, in order to improve the sorting order of algorithm tasks in the task list, a doubly linked list can be used to construct the task list.

According to the embodiment, whether there are algorithm tasks in the priority task list is detected; if the priority task list is a blank list, whether there are algorithm tasks in the secondary task list is detected; and if there are algorithm tasks in the secondary task list, the algorithm task ranked first in the secondary task list is taken as the algorithm task to be executed. Due to the simultaneous setting of a priority task list and a secondary task list, it is ensured that the algorithm tasks submitted by the demand nodes can be executed sequentially, while some high priority tasks are also allowed to be executed first, which is more in line with the computational needs of practical scenarios.

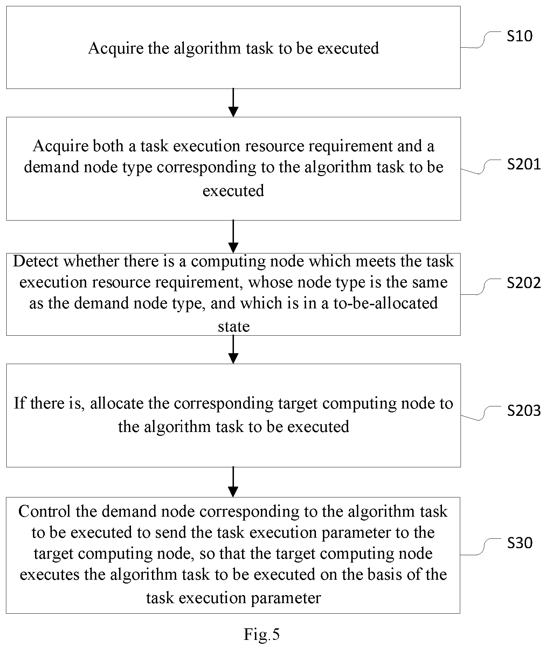

Referring to Fig. 5, Fig. 5 is a flowchart of the fourth embodiment of the model algorithm operation method in the present application.

Based on the first embodiment described above, the Step S20 of the model algorithm operation method in this embodiment includes the following steps. At Step S201: both the task execution resource requirement and a demand node type corresponding to the algorithm task to be executed are acquired.

It should be noted that there may be various types of intelligent node devices in the power system, such as rectifiers, inverters, photovoltaic modules, smart batteries, and other types of intelligent node devices. Due to the computing power core in intelligent node device cannot be modified too much due to weak computing power and memory resource in general. Therefore, different types of intelligent node devices may be modified in different ways, and the algorithms that can be executed after modification may also different. Therefore, when allocating corresponding computing nodes to demand nodes, it is necessary to allocate the computing node whose node type is consistent with the type node of the demand node and which is capable of completing the algorithm task. At this time, in order to correctly allocate computing nodes, the task execution resource requirements and demand node types corresponding to the algorithm tasks to be executed can be acquired.

The task execution resource requirement corresponding to the algorithm task to be executed can be the computing resources required to execute the algorithm task to be executed (such as required CPU computing power, memory size, etc.), and the demand node type corresponding to the algorithm task to be executed can be the device type of the demand node that submits the algorithm task to be executed.

For example, multiple AI algorithm modules are embedded (or deployed) in the rectifier equipment software, such as the status monitoring module a1 for detecting whether a fan is stuck, and the algorithm module a2 for predicting the aging degree of a key component; multiple AI algorithm modules are also embedded in the intelligent Battery Management System (BMS) software, such as the State of Charge (SOC) prediction algorithm module b1, the battery short circuit recognition algorithm module b2, and the solar power supply scenario perception module b3; and therefore, if a rectifier proposes an AI algorithm task to be executed at this time, the AI algorithm task needs to be allocated to another for execution.

At Step S202: whether there is a computing node which meets the task execution resource requirement, has a same node type as the demand node type, and is in a to-be-allocated state is detected.

At Step S203: if there is, the corresponding target computing node is allocated to the algorithm task to be executed.

It should be noted that in order to facilitate allocation, the model algorithm operation device can record the state of each computing node to distinguish whether the corresponding algorithm task has been allocated thereto. At this time, computing nodes that have been allocated algorithm tasks can be marked as an allocated state, and computing nodes that have not been allocated algorithm tasks or whose allocated algorithm tasks have been completed can be marked as a to-be-allocated state. Then, when an algorithm task to be executed needs to be allocated, the model algorithm operation device can detect whether there is a node that meets the task execution resource requirement, has a same node type as the demand node type, and is in to-be-allocated state.

The node type of the computing node can be the device type of the computing node; and if the computing resources of the computing power core in the computing node are greater than or equal to the task execution resource requirement, it can be determined that the task execution resource requirement is met.

It can be understood that if there is a computing node that meets the task execution resource requirement, has the same node type as the demand node type, and is in the to-be-allocated state, the computing node can be taken as the target computing node corresponding to the algorithm task to be executed.

In practical use, after allocating the corresponding target computing node to the algorithm task to be executed, the model algorithm operation device can set the state of the target computing node to the allocated state and notify the corresponding demand node of the algorithm task to be executed. Then, the demand node sends the identifier (ID) of the algorithm task to be executed and various input parameters (or feature parameters) to the target computing node via the CAN bus network, and the target computing node executes the algorithm task to be executed; after the execution is completed, the target computing node feeds back the output result to the corresponding demand node of the algorithm task to be executed via the CAN bus network. After receiving the output result, the demand node corresponding to the algorithm task to be executed will notify the model algorithm operation device, and the model algorithm operation device will set the state of the target computing node to the pending allocation state.

If there is no such computing node, the algorithm task to be executed can be marked as a waiting state and return to Step S202 to continue monitoring.

In specific implementation, in order to ensure that the power system has sufficient computing power to execute the model algorithm, after Step S202 described in this embodiment, it may also include that: in the case where each computing node which meets the task execution resource requirement and has a same node type as the demand node type is in an allocated state, a shared computing node is set as the target computing node corresponding to the algorithm task to be executed.

It should be noted that the shared computing node can be an additional computing device that can be installed in the power supply system by management personnel of model algorithm operation device. The shared computing node can also be a computing node that can execute the same model algorithm as the demand node. Communication among the shared computing node, the demand node, the computing node, and the model algorithm operation device can also be achieved by utilizing the connection method of the power system itself. Different shared computing nodes can be set for different node types, or a unified computing node can be set.

For example, after the shared computing node burned with the code of all algorithm modules of the rectifier (fan status monitoring module a1, device aging prediction module a2, etc.) can be used as the shared computing node of the rectifier; and if the code of all algorithm modules of the battery ( the SOC prediction module b1, internal short circuit recognition module b2, power supply scenario perception module b3, etc.) is further loaded, the shared computing node can serve as a shared computing node for the rectifier and battery.

It can be understood that in the case where the computing nodes that meet the task execution resource requirement and have the same node type as the demand node type, are all in an allocated state, it means that there is no computing node that can execute the algorithm task to be executed at the current time. At this time, the shared computing node can be used to execute the algorithm task to be executed. Therefore, the shared computing node can be set as the target computing node corresponding to the algorithm task to be executed.

If the computing power and memory resources of the shared computing node are strong enough, the shared computing node can be used as an edge computing gateway. At this time, it is no longer necessary to set computing nodes, the shared computing node can directly execute the algorithm tasks submitted by all demand nodes.

On such basis, the shared computing node can be configured in the following three ways.
(1) No configuration: when idle devices (i.e., demand nodes in an idle state) have sufficient computing power in the power system, there is no need to configure shared computing nodes.
(2) Low configuration: when idle devices have insufficient computing power, the idle devices serve as the computing node while an additional shared computing module can be set.
(3) High configuration: when idle devices have insufficient computing power and shared computing nodes have high computing power and large memory resources, idle devices can no longer serve as computing nodes.

In specific implementation, the peak demand of the model algorithm used can be compared with the computing power of idle devices to determine whether the computing power of idle devices is sufficient.

According to the embodiment, both the task execution resource requirement and a demand node type corresponding to the algorithm task to be executed are acquired, whether there is a computing node which meets the task execution resource requirement, has the same node type as the demand node type, and is in a to-be-allocated state is detected; and if there is, the corresponding target computing node is allocated to the algorithm task to be executed. Due to the allocation of target computing nodes based on the task execution resource requirement and demand node type corresponding to the algorithm tasks to be executed, it can ensure that the final allocated target computing node can execute the algorithm tasks to be executed normally.

In addition, the present embodiment also proposes a storage medium on which a model algorithm running program is stored. When the model algorithm running program is executed by a processor, the steps of the model algorithm operation method as described above are implemented.

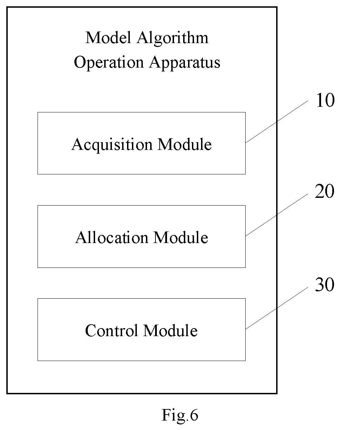

Referring to Fig. 6, Fig. 6 is a structural block diagram of the first embodiment of the model algorithm operation apparatus in the present application.

As shown in Fig. 6, the model algorithm operation apparatus proposed in the embodiment of the present application includes: an acquisition module 10, used to acquire an algorithm task to be executed; an allocation module 20, used to allocate a corresponding target computing node to the algorithm task to be executed; a control module 30, used to control a demand node corresponding to the algorithm task to be executed to send a task execution parameter to the target computing node, so that the target computing node executes the algorithm task to be executed on the basis of the task execution parameter.

This embodiment acquires an algorithm task to be executed, allocates a corresponding target computing node to the algorithm task to be executed, and controls a demand node corresponding to the algorithm task to be executed to send a task execution parameter to the target computing node, so that the target computing node executes the algorithm task to be executed on the basis of the task execution parameter. Due to the modification of the power system and the use of idle computing nodes to execute the model algorithm, and without frequent interaction between the edge and terminal sides, it ensures that the model algorithm can be directly set to execute on the terminal side and is also very easy to maintain.

In one possible implementation of the present application, the acquisition module 10 is further used to detect whether there are algorithm tasks in a task list, which is used to store the algorithm tasks to be executed; and if there is, the algorithm task ranked first in the task list is taken as the algorithm task to be executed.

In one possible implementation of the present application, the task list comprises a priority task list and a secondary task list, the priority task list is used to store algorithm tasks with high execution priority, and the secondary task list is used to store algorithm tasks with low execution priority; and the acquisition module 10 is further used to detect whether there are algorithm tasks in the priority task list; if the priority task list is a blank list, detect whether there are algorithm tasks in the secondary task list; and if there are algorithm tasks in the secondary task list, take the algorithm task ranked first in the secondary task list as the algorithm task to be executed.

In one possible implementation of the present application, the acquisition module 10 is further used to acquire a delay demand value corresponding to the algorithm task after receiving the algorithm task submitted by the demand node; when the delay demand value is greater than a preset delay threshold, add the algorithm task to the secondary task list; or when the delay demand value is less than or equal to the preset delay threshold, add the algorithm task to the priority task list.

In one possible implementation of the present application, the acquisition module 10 is further used to detect whether there is a timeout tasks in the secondary task list, the difference between a task creation time of the timeout task and the current time being greater than the delay demand value; and if there is a timeout task, adding the timeout task to the priority task list.

In one possible implementation of the present application, the acquisition module 10 is further used to detect whether there is a timeout task in the priority task list; and if there is, raise the priority of the timeout task in the priority task list is increased.

In one possible implementation of the present application, the demand nodes include different types of demand nodes; the allocation module 20 is further used to acquire both a task execution resource requirement and a demand node type corresponding to the algorithm task to be executed; detect whether there is a computing node that meets the task execution resource requirement, has the same node type as the demand node type, and is in a to-be-allocated state; and if there is, allocate the corresponding target computing node to the algorithm task to be executed.

In one possible implementation of the present application, the power system is further provided with a shared computing node, and the shared computing node can execute the same model algorithm as the demand node; and the allocation module 20 is further used to set the shared computing node as the target computing node corresponding to the algorithm task to be executed in the case where computing nodes that meet the task execution resource requirement and have the same node type as the demand node type are all in an allocated state.

It should be understood that the above is only an example and does not constitute any limitation on the technical solution of the present application. In specific applications, those skilled in the art can make settings as needed, and the present application does not limit this.

It should be noted that the workflow described above is only illustrative and does not limit the scope of protection of the present application. In practical applications, those skilled in the art can choose some or all of them to achieve the purpose of this embodiment according to actual needs, and there is no limitation here.

In addition, technical details not described in detail in this embodiment can refer to the model algorithm operation method provided in any embodiment of the present application, which will not be repeated here.

In addition, it should be noted that in this article, the terms "including", "containing" or any other variation thereof are intended to encompass non exclusive inclusion, such that a process, method, article, or system that includes a series of elements not only includes those elements, but also includes other elements not explicitly listed, or also includes elements inherent to such a process, method, article, or system. Without further limitations, the element limited by the statement "including a..." does not exclude the existence of other identical elements in the process, method, article, or system that includes that element.

The above embodiment numbers are for description only and do not represent the advantages or disadvantages of the embodiments.

Through the description of the above implementation methods, those skilled in the art can clearly understand that the above embodiment methods can be implemented through software and necessary general hardware platforms. Of course, they can also be implemented through hardware, but in many cases, the former is the better implementation method. Based on this understanding, the technical solution of the present application can essentially or contribute in the form of a software product, which is stored in a storage medium (such as Read Only Memory (ROM)/RAM, magnetic disk, optical disk) and includes several instructions to enable a terminal device (which can be a mobile phone, computer, server, or network device, etc.) to execute the methods described in various embodiments of the present application.

The above are only preferred embodiments of the present application and do not limit the scope of the patent application. Any equivalent structure or equivalent process transformation made using the content of the present application specification and drawings, or directly or indirectly applied in other related technical fields, are also included in the scope of patent protection of the present application.

## Claims

1. A model algorithm operation method, performed by a power system, the power system being provided with a demand node and a computing node connected to each other, the demand node comprising an intelligent node device capable of executing a model algorithm in the power system, and the computing node being a demand node in an idle state;
the model algorithm operation method comprises:
acquiring an algorithm task to be executed;
allocating a corresponding target computing node to the algorithm task to be executed;
controlling a demand node corresponding to the algorithm task to be executed to send a task execution parameter to the target computing node, so that the target computing node executes the algorithm task to be executed on the basis of the task execution parameter.

2. The model algorithm operation method according to claim 1, wherein acquiring the algorithm task to be executed comprises:
detecting whether there are algorithm tasks in a task list, wherein the task list is used to store algorithm tasks to be executed;
taking, in the case where there are algorithm tasks in the task list, an algorithm task ranked first in the task list as the algorithm task to be executed.

3. The model algorithm operation method according to claim 2, wherein the task list comprises a priority task list and a secondary task list, the priority task list is used to store algorithm tasks with high execution priority, and the secondary task list is used to store algorithm tasks with low execution priority;
acquiring the algorithm task to be executed comprises:
detecting whether there are algorithm tasks in the priority task list;
detecting, in the case where the priority task list is a blank list, whether there are algorithm tasks in the secondary task list; and
taking, in the case where there are algorithm tasks in the secondary task list, an algorithm task ranked first in the secondary task list as the algorithm task to be executed.

4. The model algorithm operation method according to claim 3, wherein prior to detecting whether there are algorithm tasks in the priority task list, further comprising:
acquiring a delay demand value corresponding to an algorithm task submitted by a demand node after receiving the algorithm task submitted by the demand node; and
adding, in the case where the delay demand value is greater than a preset delay threshold, the algorithm task submitted by the demand node to the secondary task list; or
adding, in the case where the delay demand value is less than or equal to a preset delay threshold, the algorithm task submitted by the demand node to the priority task list.

5. The model algorithm operation method according to claim 3, wherein prior to detecting whether there are algorithm tasks in the priority task list, further comprising:
detecting whether there is a timeout task in the secondary task list, wherein a difference between a task creation time of the timeout task and a current time is greater than a delay demand value; and
adding, in the case where there is a timeout task in the secondary task list, the timeout task to the priority task list.

6. The model algorithm operation method according to claim 3, wherein prior to detecting whether there are algorithm tasks in the priority task list, further comprising:
detecting whether there is a timeout task in the priority task list;
raising, in the case where is a timeout task in the priority task list, the priority of the timeout task in the priority task list.

7. The model algorithm operation method according to any one of claims 1-6, wherein different types of demand nodes are comprised;
allocating the corresponding target computing node to the algorithm task to be executed comprises:
acquiring a task execution resource requirement corresponding to the algorithm task to be executed and a demand node type corresponding to the algorithm task to be executed;
detecting whether there is a computing node which meets the task execution resource requirement, has a same node type as the demand node type, and is in a to-be-allocated state; and
allocating the corresponding target computing node to the algorithm task to be executed.

8. The model algorithm operation method according to claim 7, wherein the power system is further provided with a shared computing node, wherein the shared computing node is capable of executing a same model algorithm as the demand node;
after detecting whether there is the computing node which meets the task execution resource requirement, has the same node type as the demand node type, and is in the to-be-allocated state, the method further comprising:
setting the shared computing node as the corresponding target computing node of the algorithm task to be executed in the case where each computing node which meets the task execution resource requirement and whose node type is the same as the demand node type is in an allocated state.

9. A model algorithm operation device, comprising a processor, a memory, and a model algorithm running program stored on the memory and executable on the processor, which when executed by the processor, it implements the steps of the model algorithm operation method according to any one of claims 1 to 8.

10. A computer-readable storage medium storing model algorithm running program, which when executed, it implements the steps of the model algorithm operation method according to any one of claims 1 to 8.
